# EUROPEAN PATENT SPECIFICATION

(11) **EP 4 111 255 B1**
(45) Date of publication and mention of the grant of the patent: **26.02.2025**
(21) Application number: 21759811.9
(22) Date of filing: 26.02.2021
(51) Int. Cl.: G02C 5/22

(54) **FRICTION HINGE**
REIBUNGSSCHARNIER
CHARNIÈRE À FROTTEMENT

(30) Priority: 26.02.2020 DK PA202070123
(43) Date of publication of application: 04.01.2023
(73) Proprietor: Lindberg A/S, 8230 Aabyhøj (DK)
(72) Inventor: KOFOED, Jeppe Birch, 8380 Trige (DK); LINDBERG, Henrik, 8240 Risskov (DK); BØJVAD, Lars, 8270 Højbjerg (DK); MACH, Thomas, 8541 Skødstrup (DK); BOYE-NIELSEN, Hans, 8382 Hinnerup (DK)
(74) Representative: Patrade A/S
(86) International application number: PCT/DK2021/050057
(87) International publication number: WO 2021/170195

(56) References cited:
- DE-B- 1 117 911
- DE-B- 1 117 911
- FR-A1- 2 607 270
- FR-A1- 2 607 270
- FR-A1- 3 094 801
- FR-A1- 3 094 801
- FR-A2- 2 404 241
- FR-A2- 2 404 241
- US-A- 2 828 668
- US-A- 3 042 961
- US-A- 4 428 094
- US-A- 4 428 094

## Description

### Field of the Invention

The present invention is directed to a hinge for pivotally connecting a temple bar and the rims in an eyeglass frame as well as a pair of eyeglasses incorporating such a hinge.

It shall be understood that eyeglasses within the invention shall be understood as eyeglasses with a rim surrounding the entire periphery of the lenses, half-rims surrounding only part of the periphery of the lenses, and rim-less eyeglasses, where the temple bars are attached directly to the lenses without a rim.

More precisely the invention relates to a hinge for pivotally connecting two parts, for example a temple bar and the rims in an eyeglass frame or two sections of a temple bar, where the hinge comprises:
- in a distal end of a first part is provided an upper flange and a lower flange, where said flanges are spaced apart by the distance x, and where a first aperture is provided in the upper flange, said aperture having a diameter y;
- in a distal end of a second part a through-going second aperture is provided, said through-going aperture defining an inner cylindrical wall, where said second aperture has a diameter z, and where the distance k between an upper surface and a lower surface of the second part is smaller than the distance x between said flanges;
- a bushing made from a resilient material is arranged in the through-going second aperture, said bushing having an axis of symmetry, and where the extent of the bushing along the axis of symmetry is equal to or larger than the distance k between an upper surface and a lower surface of the second part but smaller than the distance x between said flanges, said bushing having an inner opening with a diameter l perpendicular to the axis of symmetry;
- a locking pin, said locking pin having a head section and a cylindrical body section defining an axis of symmetry, where the head section in a cross section perpendicular to the axis of symmetry has a dimension such that the head section may be accommodated in the first aperture, and where the extend of the body section along the axis of symmetry is equal to or larger than the distance x between said flanges, and where the diameter n of the body section perpendicular to the axis of symmetry is equal to or larger than the diameter l of the inner opening of the bushing;
such that by inserting the bushing in the aperture in the distal end of the second part, and inserting the distal end of the second part in between the upper surface and the lower surface in the distal end of the first part, the first aperture in the upper flange will be superposed the inner opening of the bushing, whereby the locking pin's body section may be inserted inside the inner opening of the bushing, and thereby pivotably connect the two parts

### Background of the Invention

In the art it is well-known to provide hinge constructions between the temple bars and the rims of the glasses where such hinges have a variety of different characteristics depending on the particular eyeglass frame which is desirable to manufacture.

One of the desirable aspects of a hinge is the ability of the hinge to maintain the temple bar in a substantially fixed position with respect to the rims of the eyeglasses where "substantially fixed position" in this connection shall be understood such that in order to pivot the temple bars relative to the rims, requires a slight amount of force, however, the temple bars are not able to pivot by themselves. The necessary force shall not deform or otherwise have detrimental influence on any part of the eyeglass frames.

For this purpose a number of various designs have been contemplated, but in all of these designs the hinge construction depends on relatively complex constructions involving springs or pure friction obtained by tightening the screw connecting the temple bar to the rim sufficiently in order to create the desired friction thereby retaining the temple bar in a substantially fixed position relative to the rims.

Common for these prior art solutions is that they are rather complicated or that they need to be readjusted after some time due to wear and tear whereby the connection between the temple bar and the rim becomes loose and does not fulfil the desired purpose.

A hinge of the type described by way of introduction is known from US 4,428,094. In this hinge a rotation may occur between the bushing and the second aperture or between the bushing and the locking pin. Accordingly, it is not clear whether rotation will occur in relation to another element. The mutual rotation may therefore take place in such way that the bushing may rotation in relation both to the pin and the aperture, hereby. this is a drawback as there is no control of the forces to be used for establishing the rotation. Moreover, wear of the hinge parts may not be controlled as it is unsecure which elements there are moving in relation to another element. Furthermore, is no teaching of how to maintain same friction between the hingedly connected members over a very long period.

### Object of the Invention

Consequently, it is an object of the present invention to address this by alleviating the drawbacks of the prior art by providing a hinge construction which is able to reliably retain the temple bars in a substantially fixed position relative to the rims and at the same time is relatively small, compact and unobtrusive and furthermore created in a simple manner. Furthermore, it is an object to maintain the same friction between the hingely connected members over a very long period of time.

### Description of the Invention

The invention addresses this by providing a hinge as described by way of introduction and which hinge is peculiar in that the surface roughness of the wall of the second aperture has a larger roughness value Ra than the roughness value Ra of the locking pin thereby having a higher friction between the bushing and the wall of the second aperture than between the inner opening in the bushing and the locking pin.

Particularly, the relatively tight fit between the bushing and the aperture into which it is positioned as well as the tight fit between the locking pin and the bushing provides a substantial friction in order for the temple bar to be able to remain in a substantially fixed position with respect to the rim, i.e. in a position where it requires some manipulation in order to pivot the temple bar relative to the rim due to the friction created in the hinge. In this manner the friction between the hingedly connected members is retained for a very long time. The fact that an elastic/resilient material is retained under compression inside the hinge construction will provide and maintain the desired friction, even after wear, as the resilient material will urge against the surfaces thereby maintaining the desired friction.

At the same time the construction is relatively simple in that the locking pin is retained partly by the bushing and partly by the aperture provided in the upper flange in the distal end of the first part.

By differentiating the roughness values and thereby differentiating the friction between the bushing and the second aperture and the friction between the bushing and the locking pin it is possible to control which parts will move relative to which parts during the pivotable movement of the hinge. The roughness value Ra is an indication of the surface friction between two parts and as such by having a higher friction between two parts than between two other parts it is clear that the parts with the lowest friction, i.e. the lowest roughness values, will move relative to each other before the higher roughness (higher friction) will begin to move.

In this way it is possible as suggested in this embodiment to create movement during pivoting of the hinge mechanism between the locking pin and the bushing. Hereby it is possible to control the friction over a long time by suitable selection of the material and the properties of the material and the elements used for the hinge elements.

It shall be understood that eyeglasses at least within the present application shall be understood as eyeglasses with a rim surrounding the entire periphery of the lenses, half-rims surrounding only part of the periphery of the lenses, and rim-less glasses, where the temple bars are attached directly to the lenses without a rim.

In a still further advantageous embodiment of the invention the friction is further increased in that the diameter n of the body section of the locking pin perpendicular to the axis of symmetry is larger than the diameter l of the inner opening of the bushing, and where the bushing may be deformed, such that excessive material is squeezed into the space created by the differences in length between the distance x between said flanges and the distance k between the upper surface and the lower surface of the second part.

In this manner the insertion of the cylindrical body section of the locking pin into the bushing will deform the bushing which is held firmly in place by the aperture in the second part such that the bushing material will be squeezed out of the aperture in the second part thereby forming a further resilient bearing between the first and second parts. Furthermore, the deformation will increase the frictional engagement between the locking pin, the bushing and the second part.

In a still further advantageous embodiment of the invention the lower flange is provided with a depression, suitable to accommodate the distal end of the locking pin, said depression being formed on the side of the lower flange facing the upper flange.

In this manner a guidance and steering for the distal end of the locking pin is created in the lower flange of the first part such that as the locking pin is inserted through the aperture provided in the upper flange of the first part and passed through the aperture in the second part the distal end of the locking pin will be retained in the recess created in the lower flange. At the same time the head section of the locking pin will be retained in the aperture provided in the upper flange. Thereby the two parts of the hinge are pivotally locked together by the locking pin in a stable and secure manner.

In a still further advantageous embodiment of the invention the outer diameter of the bushing l₂ perpendicular to the axis of symmetry when not arranged in the second aperture, is larger than the diameter z of the second aperture.

By providing a bushing having a larger diameter than the aperture into which it is to be fitted the bushing needs to be deformed during mounting in the aperture. During mounting/installation of the bushing a part of the excess material will be able to extend along both rims of the aperture and at the same time the inner diameter of the bushing due to the squeezing of the bushing when being arranged in the aperture is smaller than the original bushing not inserted.

Furthermore, when the locking pin is inserted into the bushing the locking pin will also deform the bushing such that further excess material is squeezed out of the aperture such that the excess bushing material will provide a resilient bearing between the first and second parts. By correctly dimensioning the dimensions of the bushing and at the same time selecting the proper material properties it is possible to provide a deformation of the resilient material of the bushing such that the yield stress of the material is achieved whereby a substantially homogenous deformation of the bushing will occur whereby the bearing will be evenly distributed in the space between the distal end of the first part and the distal end of the second part.

In a still further advantageous embodiment of the invention the head section of the locking pin is press-fitted into the first aperture provided in the upper flange.

By press-fitting the locking pin's head into the aperture in the upper flange of the first part the locking pin is fixed with respect to the aperture such that the locking pin cannot rotate in the aperture and at the same time the locking pin is safely retained in the hinge construction ensuring that the integrity of the hinge is maintained during use.

Furthermore, due to the provision of the bushing and in some embodiments the design of the relative friction between the different parts it is with the present invention possible to design the frictional engagement between the pivoting parts such that the locking pin will not be forced to rotate relative to the first part. Consequently, a very stable and secure connection is created in the hinge between the locking pin provided in the first part and the aperture provided in the second part.

In a still further advantageous embodiment, the first and second parts are made from titanium and where the bushing is made from a polymer material with a shore A hardness of 50 or more, preferably 60 or more. With this selection of materials, it is possible to create a very light construction which at the same time has superior strength characteristics due to the inherent strength characteristics of titanium. Furthermore, by selecting the bushing from a polymer material having the desired shore A hardness of 50 or more the wear and tear in the hinge joint will be negligible thereby ensuring a long, stable service life for such a hinge construction.

Among the many polymers which are suitable for the present invention, especially preferred are the polymer materials of the polyamide type, particularly PA6 or PA11.

The invention is also directed to eyeglass frames made from a resilient metal material, said frames comprising rims suitable to receive lenses, and two temple bars arranged on either side of the rims, where the temple bars are connected to the rims by means of two hinges according to any of claims 1 to 8.

It is clear that eyeglass frames made with a hinge construction as already described above will obtain and enjoy the same advantages as mentioned with respect to the hinge construction.

### Description of the Drawing

The invention will now be explained with reference to the accompanying drawing wherein
- Figure 1: illustrates an example of frames for eyeglasses with a full rim
- Figure 2: illustrates an example of rim-less eyeglasses
- Figure 3: illustrates the hinge construction before the locking pin is inserted
- Figure 4: illustrates the hinge construction after the locking pin is received in the recess
- Figure 5: illustrates the bushing.

### Detailed Description of the Invention

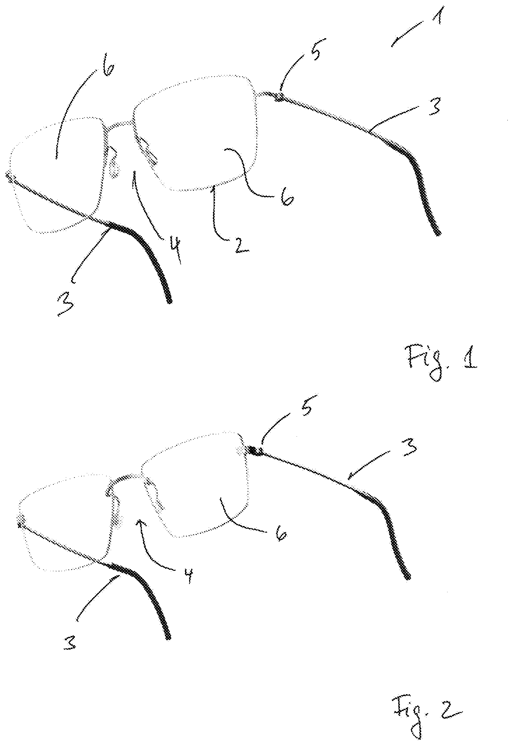

In figure 1 is illustrated an example of frames for eyeglasses 1. The frames typically comprise a pair of rims 2 in which rims means are provided for holding correctional lenses 6. From the rims 2 usually extend two temple bars 3 such that the eyeglasses 1 may be borne by a user by arranging the temple bars, for example over the ears, and arranging a nose bar 4 on the nose. It is well-known to provide a hinge 5 between the temple bars 3 and rims 2 such that the temple bars may be pivoted into a position where the longitudinal extent of the temple bar 3 is substantially parallel to the plane of the rims 2. This is typically done for storage.

In fig. 2 is illustrated an example of a pair of eyeglasses of the rimless type, where the temple bars 3 are mounted directly on/in the lenses 6.

It is, however, desirable that the hinge construction 5 retains the temple bars 3 in a substantially fixed position with respect to the rims 2 in order to provide comfort for the wearer. In some instances, the relative distance between the temple bars 3 may be such that the temple bars squeeze onto the side of the head of the user in order to retain the eyeglasses relatively fixed relative to the wearer.

The present invention is directed to providing a hinge construction 5 which is novel and inventive and does comprise a number of advantageous technical features. Furthermore, a pair of eyeglasses incorporating such hinges will also be included in the invention.

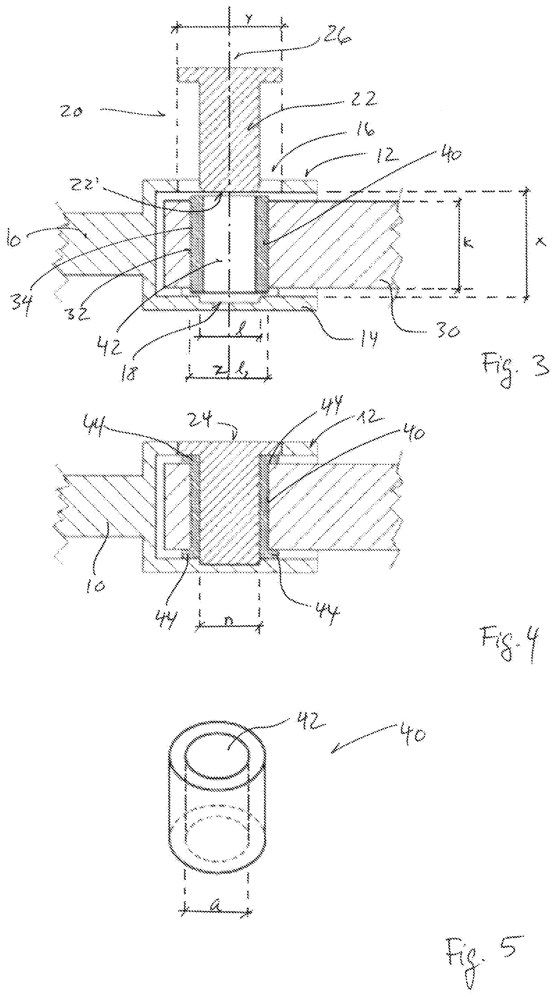

The main principle of the invention will be explained with reference to figures 3 and 4 illustrating cross-sections through a hinge construction before and after insertion of a locking pin.

In figure 3 the hinge construction comprises a first part 10, for example being a temple bar. The first part is in a distal end provided with an upper flange 12 and a lower flange 14. The distance between the flanges is x. In the upper flange 12 is provided a first aperture 16 where this aperture has a diameter y. In the lower flange 14 is provided a recess 18. When inserting the locking pin 20 through the first aperture 16 the body section 22 of the locking pin and in particular the distal end 22' of the body section of the locking pin will be received in the recess 18 as illustrated with reference to figure 4.

The locking pin 20 furthermore comprises a head section 24. The head section 24 has a dimension perpendicular to the axis of symmetry 26 such that a snug and tight fit may be created between the head section 24 of the locking pin 20 and the aperture 16 provided in the upper flange when the locking pin is inserted into a locked position as illustrated with reference to figure 4. The extent of the body section 22 is such that when the head section 24 is in its proper snug and tight-fit position in the aperture 16 the distal end 22' of the body section 22 of the locking pin 20 will engage the recess 18 provided in the lower flange 14.

The other part of the hinge comprises a second part 30. In a distal end of the second part is provided a second aperture 32. The second aperture 32 is a through-going aperture such that the aperture defines an inner cylindrical wall 34. The second aperture has a diameter z. Furthermore, the thickness k of the second part, i.e. the distance between the upper and lower side of the second part is k where k is smaller than the distance x between the upper and lower flanges 12, 14 of the first part. In this manner it is possible to insert the second part 30 between the flanges 12, 14 of the first part 10 with some play.

In the second aperture in the second part 30 is arranged a bushing 40. In this embodiment the bushing has an extent along the axis of symmetry 26 which is larger than the thickness of the second part 30 but smaller than the distance x between the upper and lower flange 12, 14 of the first part 10.

Furthermore, the bushing 40 as illustrated in fig. 5 has an inner opening 42 with a diameter perpendicular to the axis of symmetry of a.

Continuing on to figure 4 the locking pin 20 has been inserted through the first aperture 16 such that the body section 22 of the locking pin 20 is fitted inside the opening 42 in the bushing 40. Furthermore, the distal end 22' of the body section 22 of the locking pin 20 is accommodated in the recess 18 in the lower flange 14. During the insertion of the locking pin 20 the bushing 40 has been deformed such that extra bushing material has been forced into the space between the first part and the second part. This extra bushing material 44 creates a bearing between the first and second parts 10, 30 such that a stable, firm and resilient connection is created between the two parts 10, 30. It is to be understood that the surplus bushing material will be retained in the immediate vicinity of the locking pin, and that the deformation will not cause the bushing material to disintegrate. This may be controlled by applying the forces from the locking pin slowly and/or carefully heating the bushing material and/or selecting the bushing material such that any deformation does not cause disintegration or failure.

In order for the bushing to be able to deform as illustrated in figure 4 the bushing may advantageously be made from a resilient polymer material such as for example a polyamide. Particularly, PA6 is well-known for its hardness, strength, ductility, wearability and resistance to chemicals such that the PA6 is more or less considered as a universal polymer material for these kinds of bearings. Also a further derived polyamide PA11 may be used where the PA11 has a higher hardness and ductility and as such may be more difficult to deform as illustrated in figure 4, but nevertheless provides excellent wear characteristics providing a long service life.

Furthermore, the polymer should be selected with a shore A hardness (according to ASTMD2240 and ASTMD1414) in the range of 50 to 60 in order to provide sufficient resiliency to be deformed by inserting the locking pin 20 through the bushing and at the same time provide sufficient wear resistance and strength in order to create a stable and reliable hinge construction.

Although the various dimensions ensure that sufficient friction is established between the pivoting parts the surface roughness particularly of the inner wall of the second aperture may be chosen to be higher than the surface roughness between the bushing and the locking pin body section 22. By selecting the surface roughness value (Ra) to be higher between the bushing and the second part than between the body section 22 of the locking pin 20 and the inner opening of the bushing the hinge is designed such that pivotable movement will occur between the body section 22 of the locking pin and the inner opening in the bushing. For the sake of completeness, the roughness parameters are established according to BS EN ISO4287:2000 (British standard) which corresponds to ISO4287:1997 (European standard). The parameter Ra is the arithmetic average of roughness profile.

## Claims

1. Hinge for pivotally connecting a temple bar (3) and the rims (2) in an eyeglass frame or two sections of a temple bar (3), where the hinge (5) comprises:
- in a distal end of a first part (10) is provided an upper flange (12) and a lower flange (14), where said flanges (12,14) are spaced apart by a distance x, and where a first aperture (16) is provided in the upper flange (12), said aperture having a diameter y;
- in a distal end of a second part (30) a through-going second aperture (32) is provided, said through-going aperture defining an inner cylindrical wall (34), where said second aperture (32) has a diameter z, and where a distance *k* between an upper surface and a lower surface of the second part is smaller than the distance x;
- a bushing (40) made from a resilient material is arranged in the through-going second aperture (32), said bushing having an axis of symmetry (26), and where the extent of the bushing along the axis of symmetry is equal to or larger than the distance k but smaller than the distance x, said bushing having an inner opening (42) with a diameter *l* perpendicular to the axis of symmetry (26);
- a locking pin (20), said locking pin having a head section (24) and a cylindrical body section (22) defining an axis of symmetry (26), where the head section (24) in a cross section perpendicular to the axis of symmetry (26) has a dimension such that the head section (26) may be accommodated in the first aperture (16), and where the extend of the body section (22) along the axis of symmetry (26) is equal to or larger than the distance *x*, and where a diameter n of the body section (22) perpendicular to the axis of symmetry (26) is equal to or larger than the diameter *l*;
such that by inserting the bushing (40) in the second aperture (32) in the distal end of the second part (30), and inserting the distal end of the second part (30) in between the upper surface and the lower surface in the distal end of the first part (10), the first aperture (16) in the upper flange (12) will be superposed the inner opening of the bushing (40), whereby the locking pin's (20) body section (22) may be inserted inside the inner opening (42) of the bushing (40), and thereby pivotably connect the two parts, **characterized in that** the surface roughness of the wall of the second aperture (32) has a larger roughness value Ra than the roughness value Ra of the locking pin (20) thereby having a higher friction between the bushing (40) and the wall of the second aperture (32) than between the inner opening (42) in the bushing (40) and the locking pin (20).

2. Hinge according to claim 1 wherein the diameter n is larger than the diameter *l* and where the bushing (40) may be deformed, such that excessive material is squeezed into the space created by the differences in length between the distance *x* and the distance *k.*

3. Hinge according to claim 1 or 2 wherein the lower flange (14) is provided with a depression (18), suitable to accommodate the distal end (22') of the locking pin (20), said depression (18) being formed on the side of the lower flange facing the upper flange (12).

4. Hinge according to any preceding claim wherein an outer diameter of the bushing, *l2*, perpendicular to the axis of symmetry (26) when not arranged in the second aperture (32), is larger than the diameter z.

5. Hinge according to claim 1 wherein the head section of the locking pin (20) is press fitted into the first aperture (16) provided in the upper flange (12).

6. Hinge according to any preceding claim wherein the first and second parts (10,30) are made from titanium and where the bushing (40) is made from a polymer material with a shore A hardness of 50 or more, preferably 60 or more.

7. Hinge according to claim 6 wherein the polymer material is a polyamide: PA6 or PA 11

8. Rim (2) or rimless eyeglass frames made from a resilient metal material, said frames comprising rims suitable to receive lenses (6) or being mounted in the lenses, and two temple bars (3) arranged on either side of the rims, where the temple bars (3) either are connected to the rims (2) or lenses (6) by means of two hinges (5) according to any of claims 1 to 7 or where each temple bar (2) incorporates a hinge (5) according to any of claims 1 to 7.

## Patentansprüche

1. Scharnier zum schwenkbaren Verbinden eines Brillenbügels (3) und der Ränder (2) in einer Brillenfassung oder von zwei Abschnitten eines Brillenbügels (3), wobei das Scharnier (5) Folgendes umfasst:
- in einem distalen Ende eines ersten Teils (10) ist ein oberer Flansch (12) und ein unterer Flansch (14) bereitgestellt, wobei die Flansche (12, 14) um einen Abstand *x* voneinander beabstandet sind und wobei in dem oberen Flansch (12) eine erste Apertur (16) bereitgestellt ist, wobei die Apertur einen Durchmesser *y* aufweist;
- in einem distalen Ende eines zweiten Teils (30) ist eine durchgehende zweite Apertur (32) bereitgestellt, wobei die durchgehende Apertur eine innere zylindrische Wand (34) definiert, wobei die zweite Apertur (32) einen Durchmesser *z* aufweist und wobei ein Abstand *k* zwischen einer oberen Fläche und einer unteren Fläche des zweiten Teils kleiner als der Abstand *x* ist;
- in der durchgehenden zweiten Apertur (32) ist eine aus einem elastischen Material hergestellte Durchführung (40) angeordnet, wobei die Durchführung eine Symmetrieachse (26) aufweist und wobei die Erstreckung der Durchführung entlang der Symmetrieachse gleich dem Abstand *k* oder größer als dieser, aber kleiner als der Abstand *x* ist, wobei die Durchführung eine innere Öffnung (42) mit einem Durchmesser *l* senkrecht zu der Symmetrieachse (26) aufweist;
- einen Verriegelungsstift (20), wobei der Verriegelungsstift einen Kopfabschnitt (24) und einen zylindrischen Körperabschnitt (22) aufweist, der eine Symmetrieachse (26) definiert, wobei der Kopfabschnitt (24) in einem Querschnitt senkrecht zu der Symmetrieachse (26) eine Abmessung aufweist, sodass der Kopfabschnitt (26) in der ersten Apertur (16) aufgenommen werde kann, und wobei die Erstreckung des Körperabschnitts (22) entlang der Symmetrieachse (26) gleich dem Abstand *x* oder größer als dieser ist, und wobei ein Durchmesser *n* des Körperabschnitts (22) senkrecht zu der Symmetrieachse (26) gleich dem Durchmesser *i* oder größer als dieser ist;
sodass durch Einsetzen der Durchführung (40) in der zweiten Apertur (32) in dem distalen Ende des zweiten Teils (30) und Einsetzen des distalen Endes des zweiten Teils (30) zwischen der oberen Fläche und der unteren Fläche in dem distalen Ende des ersten Teils (10) die erste Apertur (16) in dem oberen Flansch (12) über der inneren Öffnung der Durchführung (40) liegt, wodurch der Körperabschnitt (22) des Verriegelungsstifts (20) in die innere Öffnung (42) der Durchführung (40) eingesetzt werden kann und dadurch die zwei Teile schwenkbar verbinden kann, **dadurch gekennzeichnet, dass** die Oberflächenrauhigkeit der Wand der zweiten Apertur (32) einen größeren Rauhigkeitswert Ra als der Rauhigkeitswert Ra des Verriegelungsstifts (20) aufweist, wodurch eine stärkere Reibung zwischen der Durchführung (40) und der Wand der zweiten Apertur (32) als zwischen der inneren Öffnung (42) in der Durchführung (40) und dem Verriegelungsstift (20) vorliegt.

2. Scharnier nach Anspruch 1, wobei der Durchmesser n größer als der Durchmesser *l* ist und die Durchführung (40) derart verformt werden kann, dass überschüssiges Material in den Raum gepresst wird, der durch die Längenunterschiede zwischen dem Abstand x und dem Abstand k erzeugt wird.

3. Scharnier nach Anspruch 1 oder 2, wobei der untere Flansch (14) mit einer Vertiefung (18) versehen ist, die zum Aufnehmen des distalen Endes (22') des Verriegelungsstifts (20) geeignet ist, wobei die Vertiefung (18) auf der dem oberen Flansch (12) zugewandten Seite des unteren Flansches ausgebildet ist.

4. Scharnier nach einem der vorhergehenden Ansprüche, wobei ein Außendurchmesser der Durchführung, *12*, senkrecht zu der Symmetrieachse (26), wenn sie nicht in der zweiten Apertur (32) angeordnet ist, größer als der Durchmesser *z* ist.

5. Scharnier nach Anspruch 1, wobei der Kopfabschnitt des Verriegelungsstifts (20) in die in dem oberen Flansch (12) bereitgestellte erste Apertur (16) eingepresst ist.

6. Scharnier nach einem der vorhergehenden Ansprüche, wobei das erste und das zweite Teil (10, 13) aus Titan hergestellt sind und wobei die Durchführung (40) aus einem Polymermaterial mit einer Shore-A-Härte von 50 oder mehr, vorzugsweise 60 oder mehr, hergestellt ist.

7. Scharnier nach Anspruch 6, wobei das Polymermaterial ein Polyamid: PA6 oder PA11 ist.

8. Rand (2) oder randlose Brillenfassungen, die aus einem elastischen Metallmaterial hergestellt sind, wobei die Fassungen Ränder, die geeignet sind, Linsen (6) aufzunehmen oder in den Linsen montiert zu sein, und zwei Brillenbügel (3), die auf jeder Seite der Ränder angeordnet sind, umfassen, wobei die Brillenbügel (3) entweder mittels zweier Scharniere (5) nach einem der Ansprüche 1 bis 7 mit den Rändern (2) oder Linsen (6) verbunden sind oder wobei jeder Brillenbügel (2) ein Scharnier (5) nach einem der Ansprüche 1 bis 7 enthält.

## Revendications

1. Charnière destinée à relier de manière pivotante une branche (3) et les oculaires (2) d'une monture de lunettes ou deux sections d'une branche (3), la charnière (5) comprenant :
- dans une extrémité distale d'une première partie (10) est prévue une bride supérieure (12) et une bride inférieure (14), lesdites brides (12, 14) étant espacées d'une distance x, et une première ouverture (16) étant ménagée dans la bride supérieure (12), ladite ouverture ayant un diamètre y ;
- dans une extrémité distale d'une seconde partie (30) est prévue une seconde ouverture traversante (32), ladite ouverture traversante définissant une paroi cylindrique interne (34), ladite seconde ouverture (32) ayant un diamètre z, et une distance k entre une surface supérieure et une surface inférieure de la seconde partie étant inférieure à la distance x ;
- une bague (40) constituée d'un matériau élastique est agencée dans la seconde ouverture traversante (32), ladite bague ayant un axe de symétrie (26), et l'extension de la bague le long de l'axe de symétrie étant supérieure ou égale à la distance k mais inférieure à la distance x, ladite bague ayant une ouverture interne (42) présentant un diamètre *l* perpendiculaire à l'axe de symétrie (26) ;
- une tige de verrouillage (20), ladite tige de verrouillage ayant une section de tête (24) et une section de corps cylindrique (22) définissant un axe de symétrie (26), la section de tête (24) dans une section transversale perpendiculaire à l'axe de symétrie (26) ayant une dimension telle que la section de tête (26) peut être logée dans la première ouverture (16), et l'extension de la section de corps (22) le long de l'axe de symétrie (26) étant supérieure ou égale à la distance *x*, et un diamètre n de la section de corps (22) perpendiculaire à l'axe de symétrie (26) étant supérieur ou égal au diamètre *l* ;
de telle sorte qu'en insérant la bague (40) dans la seconde ouverture (32) dans l'extrémité distale de la seconde partie (30), et en insérant l'extrémité distale de la seconde partie (30) entre la surface supérieure et la surface inférieure dans l'extrémité distale de la première partie (10), la première ouverture (16) dans la bride supérieure (12) et l'ouverture interne de la bague (40) seront superposées, moyennant quoi la section de corps (22) de la tige de verrouillage (20) peut être insérée à l'intérieur de l'ouverture interne (42) de la bague (40), et relier ainsi de manière pivotante les deux parties, **caractérisée en ce que** la rugosité de surface de la paroi de la seconde ouverture (32) a une valeur de rugosité Ra supérieure à la valeur de rugosité Ra de la tige de verrouillage (20) présentant ainsi un frottement plus élevé entre la bague (40) et la paroi de la seconde ouverture (32) qu'entre l'ouverture interne (42) dans la bague (40) et la tige de verrouillage (20).

2. Charnière selon la revendication 1 dans laquelle le diamètre n est supérieur au diamètre *l* et dans laquelle la bague (40) peut être déformée, de telle sorte que le matériau excédentaire est inséré à l'intérieur de l'espace créé par les différences de longueur entre la distance x et la distance k.

3. Charnière selon la revendication 1 ou 2 dans laquelle la bride inférieure (14) est pourvue d'un évidement (18), approprié pour recevoir l'extrémité distale (22') de la tige de verrouillage (20), ledit évidement (18) étant formé sur le côté de la bride inférieure faisant face à la bride supérieure (12).

4. Charnière selon une quelconque revendication précédente dans laquelle un diamètre externe de la bague, *l2*, perpendiculaire à l'axe de symétrie (26) lorsqu'elle n'est pas agencée dans la seconde ouverture (32), est supérieur au diamètre z.

5. Charnière selon la revendication 1 dans laquelle la partie de tête de la tige de verrouillage (20) est emmanchée par pression dans la première ouverture (16) ménagée dans la bride supérieure (12).

6. Charnière selon une quelconque revendication précédente dans laquelle les première et seconde parties (10, 13) sont constituées de titane et dans laquelle la bague (40) est constituée d'un matériau polymère présentant une dureté Shore A supérieure ou égale à 50, de préférence supérieure ou égale à 60.

7. Charnière selon la revendication 6 dans laquelle le matériau polymère est un polyamide : PA6 ou PA11.

8. Montures de lunettes à oculaires (2) ou sans oculaires constituées d'un matériau métallique élastique, lesdites montures comprenant des oculaires appropriés pour recevoir des verres (6) ou étant montées dans les verres, et deux branches (3) agencées de part et d'autre des oculaires, les branches (3) étant reliées soit aux oculaires (2) soit aux verres (6) au moyen de deux charnières (5) selon l'une quelconque des revendications 1 à 7, ou chaque branche (2) incorporant une charnière (5) selon l'une quelconque des revendications 1 à 7.
